# EUROPÄISCHE PATENTSCHRIFT

(11) **EP 0 855 772 B1**
(45) Veröffentlichungstag und Bekanntmachung des Hinweises auf die Patenterteilung: **31.10.2001**
(21) Anmeldenummer: 97122949.7
(22) Anmeldetag: 29.12.1997
(51) Int. Cl.: H02G 1/06, E02F 5/12, G02B 6/44, G02B 6/50

(54) **Verfahren zum Einbringen eines optischen oder elektrischen Kabels in einen festen Verlegegrund und Vorrichtung zum Verlegen des Kabels**
Method for installation of an optical or electrical cable in a solid ground and arrangement for installation of the cable
Méthode d'installation d'un cable optique ou électrique dans un sol solide et arrangement pour installation de cable

(30) Priorität: 20.01.1997 DE 19706791
(43) Veröffentlichungstag der Anmeldung: 29.07.1998
(73) Patentinhaber: CCS Technology, Inc., Wilmington, DE 19803 (US)
(72) Erfinder: Mayr, Ernst, 82319 Starnberg (DE); Finzel, Lothar, 85617 Unterschleissheim (DE); Diermeier, Heinz, 81739 München (DE); Dotzer, Peter, 82335 Höhenrain (DE)
(74) Vertreter: Epping, Wilhelm, Dipl.-Ing.

(56) Entgegenhaltungen:
- US-A- 4 939 512

## Beschreibung

Verfahren zum Einbringen eines optischen oder elektrischen Kabels in einen festen Verlegegrund und Vorrichtung zum Verlegen des Kabels.

Die Erfindung betrifft ein Verfahren zum Einbringen eines optischen oder elektrischen Kabels mit einer homogenen und druckwasserdichten Röhre und darin eingebrachten optischen oder elektrischen Leitern in einen festen Verlegegrund (siehe US-A-4 939 512).

Es ist bekannt, daß Kabel, insbesondere Mikrokabel, die aus einem Röhrchen mit lose darin verlaufenden Lichtwellenleitern bestehen, in einen festen Verlegegrund verlegt werden. Hierzu werden in die Struktur einer Straße, eines Geh- oder Radweges Nuten eingefräst, in die diese genannten Kabel eingelegt, fixiert und mit entsprechendem Füllmaterial zum Schutz überdeckt werden. Die Herstellung der Nuten in einem festen Verlegegrund wie Beton oder Asphalt durch Ausfräsen mit Hilfe einer entsprechenden Fräsmaschine ist jedoch relativ aufwendig, da das ausgefräste Material erhebliche Maßnahmen zur Beseitigung erfordert. Außerdem ist die Umweltbelastung infolge der Staubbildung sehr hoch. Ein weiterer Nachteil solcher Verlegeverfahren mit einer tief eingeschnittenen Nut in der Grundstruktur eines festen Untergrundes wie der einer Straße ist darin zu sehen, daß unter Umständen sogar eine "Sollbruchstelle" geschaffen wird. Es ist also darauf zu achten, daß die Tragschicht einer Straße möglichst nicht beschädigt wird.

Aufgabe der vorliegenden Erfindung ist nun, ein Verfahren zum Verlegen von Kabeln in Nuten von festen Verlegegründen zu finden, bei dem das Kabel einerseits ausreichend gegen Beschädigung geschützt wird, bei dem jedoch andererseits die tragende Schicht des festen Verlegegrundes nicht geschwächt wird, wobei die Herstellung der Nut möglichst einfach und umweltschonend erfolgen soll. Die gestellte Aufgabe wird nun gemäß der Erfindung mit einem Verfahren der eingangs erläuterten Art dadurch gelöst, daß mit einer Heizeinheit die Oberfläche des Verlegegrundes bis zur Erweichung erwärmt wird, daß mit einer Nutformeinheit in den erwärmten Verlegegrund eine Nut durch Verdrängung von Verlegegrundmaterial eingebracht wird, wobei sich das an die Oberfläche des Verlegegrundes verdrängte Verlegegrundmaterial entlang mindestens eines Nutrandes als Wulst ausbildet, daß mit einer Verlegeeinheit das optische oder elektrische Kabel in die Nut eingebracht wird, daß mit einer Fülleinheit das verdrängte Verlegegrundmaterial auf das eingeführte Kabel in die Nut wieder eingefüllt wird und daß mit einer Walzeinheit das in die Nut wieder eingebrachte Verlegegrundmaterial verdichtet wird.

Weiterhin ist Aufgabe der Erfindung, eine Verlegeeinheit zur Durchführung des Verfahrens zu schaffen. Diese gestellte Aufgabe wird gemäß der Merkmale des Patentanspruches 22 gelöst.

Vorteile an dem Verfahren gemäß der Erfindung sind unter anderem darin zu sehen, daß die für das Verlegen des Kabels erforderliche Nut nur in der Verschleißschicht und nicht wie bisher auch in der Tragschicht eines Verlegegrundes eingebracht wird. Auf diese Weise bleibt die Tragschicht unbeschädigt und es besteht nicht mehr die Gefahr zur Ausbildung von Rissen. Weiterhin ist nicht nötig, daß die Nut sauber definierte Nutränder aufweist, wie sie beim Fräsen entstehen, was zum Vorteil hat, daß das später zum Füllen der Nut wieder eingebrachte Material sich besser mit der ursprünglichen Struktur verbindet. So wird nun gemäß der Erfindung eine Nut durch Verdrängung der oberen Schicht eines Verlegegrundes gebildet, wobei das beim Bilden der Nut verdrängte bzw. aufgebrochene Material zur Oberfläche des Verlegegrundes gebracht wird, wo es sich entlang mindestens eines Längsrandes der Nut als Wulst ausbildet bzw. abgelagert wird. Zweckmäßigerweise wird beim Bilden der Nut zu beiden Seiten der entstehenden Nut mit Hilfe von Stützelementen von oben ein Gegendruck erzeugt, der verhindert, daß die Nut zu weit seitlich ausbricht. Durch eine Anformung des ausgebrochenen Verlegegrundmaterials wird verhindert, daß es ungewollt abrollt oder in die gebildete Nut zurückfällt. Nach dem Bilden der Nut wird sofort das Kabel bzw. das Rohr des Kabels in den Grund der Nut eingelegt. Hierauf wird anschließend das verdrängte und seitlich abgelagerte Verlegegrundmaterial wieder in die Nut auf das eingelegte Kabel eingefüllt und mit einer entsprechenden Walzeinheit verdichtet. Eventuelle Lufteinschlüsse, Hohlräume, Unregelmäßigkeiten oder Materialmangelstellen werden mit Füllmasse, zum Beispiel mit Bitumen, einem Granulat aus Verlegegrundmaterial oder Epoxi, verschlossen. Somit ist eine längswasserdichte Verlegung eines derart mechanisch festen Kabels, insbesondere eines Mikrokabels, in einem festen Verlegegrund wie einer Straße durchgeführt, wobei aufgrund des Verfahrens wieder ein durchgehender frostsicherer Straßenbelag hergestellt ist. Damit kann auf die Verwendung von Heißbitumen als Füll- und Versiegelungsmasse wie sie bei den bisherigen Verfahren erforderlich ist, verzichtet werden. Es entsteht bei dem Verfahren gemäß der Erfindung auch kein Schleifstaub, der entsorgt werden muß. Außerdem bleibt der ursprüngliche Aufbau des Verlegegrundes erhalten. Oberfläche, Aussehen, Festigkeit und Belastbarkeit der Oberfläche des Verlegegrundes werden dabei nicht verändert. Die Nut für die Verlegung des Kabels wird nur in der Verschleißschicht bzw. Deckschicht des Verlegegrundes, zum Beispiel in der Verschleißschicht einer Straße aus Asphalt mit einer Tiefe von ca. 2 bis 3 cm, maximal bis zur Stärke der Oberschicht des Verlegegrundes eingebracht. Diese Nuttiefe ist für eine sichere Verlegung eines Mikrokabels, dessen Röhre einen Außendurchmesser von 2 bis 15 mm aufweist, völlig ausreichend. Die Lichtwellenleiter dieses Mikrokabels werden entweder vor oder nach der Verlegung der Röhre ins Innere eingebracht. Das Kabel selbst wird nach der Verlegung durch das wieder eingebrachte, eingewalzte und verdichtete Verlegegrundmaterial von oben gegen mechanische Beanspruchungen und Verletzungen ausreichend geschützt.

Die Herstellung der Nut erfolgt durch Verdrängung von Verlegegrundmaterial mit Hilfe von entsprechenden Nutformeinheiten, die in das durch Heizelemente bereits vorgewärmte Verlegegrundmaterial eingedrückt bzw. eingepreßt werden. Dabei wird das verdrängte bzw.eventuell auch aufgebrochene Verlegegrundmaterial aus der gebildeten Nut zur Straßenoberfläche gebracht, wo es wulstartig "aufgeworfen" wird. Wenn die Korngröße des Füllstoffes des Verlegegrundes zu groß ist, um den Aufbruch des Verlegematerials zur Straßenoberfläche zu verdrängen, kann die Nutformeinheit bei Bedarf vertikal in Schwingungen versetzt werden. Dabei werden dann größere Steine bzw. Füllmittel zertrümmert. Außerdem unterstützt die Vibration das Fließverhalten des Verlegegrundmaterials. Zusätzliche Horizontalschwingungen können die Reibung zwischen dem Einpreßwerkzeug der Nutformeinheit und der Nutwand reduzieren. Dazu werden mehrere synchron laufende Exzenterscheiben am Rahmen der Nutformeinheit angebracht.

Die erforderliche Nut kann gemäß der Erfindung jedoch auch in den erwärmten Verlegegrund mit Hilfe eines Schlittens eingebracht werden, bei dem z.B. eine oszillierende Kufe unter hohem Druck eingepreßt und in Fahrtrichtung gezogen wird. Ein solches Verfahren würde etwa der Pflugtechnik entsprechen. Es ist jedoch auch möglich, einen Stößel zu verwenden, der mit sehr hoher Frequenz von oben Vertiefungen in den Verlegegrund eindrückt. Damit lassen sich bei minimalem Einpreßdruck beliebige Nutenformen, Bohrungen und auch Richtungsänderungen der Nut mit sehr kleinem Radius eindrücken,wobei ebenfalls das Verlegegrundmaterial verdrängt wird.

Vorteilhaft ist, wenn sämtliche Einheiten der einzelnen Verfahrensschritte zu einer gesamten Verlege- und Einpreßeinheit zusammengefaßt werden, vorzugsweise über entsprechende Kopplungen, die dann entlang der Verlegetrasse selbstlaufend oder gezogen in Arbeitsrichtung bewegbar ist. Eine solche Verlege- und Einpreßeinheit umfaßt folgende Funktionen:
- Erwärmen der Oberfläche des Verlegegrundes mit Hilfe einer Heizeinheit
- Einbringen der Nut mit Hilfe einer Nutformeinheit
- Kabel in die Nut einführen und niederhalten mit Hilfe einer Verlegeeinheit
- Füllung der Nut mit verdrängtem und seitlich der Nut abgelagertem Verlegegrundmaterial mit Hilfe einer Fülleinheit
- Wiederherstellen der Oberfläche des Verlegegrundes mit Hilfe einer Walzeinheit.

Im folgenden werden die nacheinander ablaufenden Verfahrensschritte näher erläutert.

Zunächst wird die Oberfläche des Verlegegrundes mit Hilfe einer Kehrvorrichtung, zum Beispiel mit einer herkömmlichen Kehrmaschine gereinigt. Eine solche Kehrmaschine könnte jedoch auch in der Gesamtverlege- und Einpreßeinheit integriert sein. Eine entsprechende Absaugvorrichtung entsorgt die aufgenommene Straßenverschmutzung, so daß die herzustellende Nut nicht mit Verunreinigungen belastet wird.

Anschließend wird die Oberfläche des Verlegegrundes im Bereich der zu erstellenden Nut mit Hilfe von Heizeinheiten so erwärmt, daß das Verlegematerial, zum Beispiel der Asphaltbelag, erweicht. Diese Erwärmung muß jedoch allmählich erfolgen, da das Material bei zu hoher Erwärmung unter Umständen geschädigt werden kann. So werden beispielsweise die beim Straßenbau bekannten Heizkissen verwendet, die bei Reparaturarbeiten eingesetzt werden, wenn die Deckschicht der Straße nicht abgefräst, sondern lediglich erwärmt und durch Walzen wieder verfestigt werden soll. Diese Heizkissen werden mit Propangas betrieben und haben eine Abmessung von etwa 1 mal 1 m oder 2 mal 2 m. Für die Heizeinheit gemäß der Erfindung werden beispielsweise mehrere Heizelemente hintereinander in einer Reihe bis zu einer Länge von ca. 10 m angeordnet. Dadurch wird die Oberfläche des Verlegegrundes allmählich erwärmt und es können bei der Herstellung der Nut große Vortriebsgeschwindigkeiten bis zu 3 km/Std erreicht werden. Die Breite dieser Heizelemente beträgt hierfür zweckmäßigerweise 0,3 bis 0,5 m. Die Heizelemente dieser Heizeinheit laufen auf Rollen und sind beispielsweise über Kupplungen miteinander verbunden. Dadurch ist die gesamte Heizeinheit lenkbar und es können bei Bedarf Kurven gefahren werden. Die Heizeinheit könnte jedoch auch kürzer gehalten werden, wenn beispielsweise die Nutformeinheit zusätzlich erwärmt wird.

Wenn die Oberschicht des Verlegegrundes bis zur Tiefe der zu erstellenden Nut ausreichend erwärmt ist, wird die Nutformeinheit abgesenkt bzw. eingesetzt. Diese Nutformeinheit kann als Rollen- oder Schlittenwerkzeug ausgebildet sein. Erstere Ausführung besteht aus einer Rolle oder aus mehreren Rollen, die hintereinander zu einem Rollensatz zusammengesetzt und angeordnet sind. Die Durchmesser und Dicken der Rollen sind abgestuft, damit die Nut allmählich erweitert und vertieft wird. Die gesamte Nutformeinheit ist absenkbar, vorzugsweise mit hydraulisch wirkenden Mechanismen. Im Prinzip müssen die Rollen nicht angetrieben, beheizt oder in Schwingungen versetzt werden, doch sind solche Zusätze bei Bedarf für Sonderfunktionen oder Spezialfälle nachrüstbar. So kann auch eine Nutformeinheit verwendet werden, mit der mehrere Nuten nebeneinanderliegend gleichzeitig hergestellt werden können. Bei normaler Anforderung an die Standzeit sind die Rollen aus einsatzgehärtetem Stahl gefertigt. Bei höheren Beanspruchungen, zum Beispiel bei hohem Steinanteil im Verlegegrund können auch Hartmetallrollen verwendet werden. Der Rollensatz ist so gestaltet, daß er leicht und schnell bei Bedarf ausgetauscht werden kann. Werden mehrere Rollen hintereinander zu einem Rollensatz zusammengefaßt, so ist die Form der Rollen so bemessen, daß die erste durch Keilwirkung leicht in die Oberfläche des Verlegegrundes eindringt; die Flanken der letzten Rolle hingegen sind annähernd rechtwinklig um eine genaue Nutenflanke zu formen.Die Rollen können z.B. rechteckigen oder zumindest zum Teil konischen Querschnitt aufweisen.

Beim Herstellen der Nut mit einem Rollenwerkzeug der beschriebenen Art kann der Nutrand undefiniert aufreißen. Dies ist besonders bei älteren, beschädigten Straßenoberflächen zu erwarten. Um jedoch nur eine bestimmte Breite der Nut zu erhalten, ist zweckmäßig, daß zu beiden Seiten der Nutformeinheit Stützelemente, zum Beispiel in Form von Stützrollen, angeordnet sind, die von oben während der Nutbildung auf die Oberfläche des Verlegegrundes einwirken und somit ein weiteres seitliches Aufreißen der Oberfläche unterbinden. Außerdem ist zweckmäßig, mit diesen Stützelementen oder einer zusätzlichen Formeinheit das aus der gebildeten Nut verdrängte Verlegegrundmaterial entlang der Nutränder vorläufig bis zum Wiedereinfüllen anzuformen, um einen Rückfall zu verhindern.

Sofort nach der Bildung der Nut durch die Nutformeinheit wird mit einer Verlegeeinheit das optische oder elektrische Kabel in die Nut eingebracht und zwar wird das Mikrokabel von der mitgeführten Kabeltrommel abgezogen und in die Nut eingebracht. Eine Kabelführung sichert eine saubere Kabelführung und eine mitlaufende Rolle hält das Kabel im Grund der Nut nieder. Unmittelbar vor und/oder hinter dem Kabeleinlauf in die Nut kann die Nutwand mit einem entsprechenden Haftvermittler, zum Beispiel einem Primer, zur Verbesserung der Haftung und unter Umständen mit flüssigem Bitumen als Kleber für und als Bindemittel für das wieder einzubringende Füllmaterial versehen werden.

Nachdem das Kabel in die Nut eingebracht ist, wird sofort das entlang mindestens eines Nutrandes verdrängte und abgelagerte Verlegegrundmaterial durch eine Fülleinheit, zum Beispiel durch einen trichterförmigen Sammler, zusammmengefaßt und in die Nut gebracht. Mit einer Walzeinrichtung in Form einer Verdichterrolle wird das eingefüllte Verlegegrundmaterial in die Nut eingewalzt und wieder verdichtet.

Nachdem die Nut wieder gefüllt und das aufgefüllte Verlegegrundmaterial mit der Verdichterrolle verdichtet ist, kann die Oberfläche des Verlegegrundes, zum Beispiel die Straßenoberfläche, wieder hergestellt werden. Für eine feinkörnige Oberfläche kann die Nutoberseite mit einem Granulat z.B. aus Verlegegrundmaterial wie Asphalt versetzt werden. Falls das Volumen des aufgebrochenen Verlegegrundmaterials für eine Verfüllung der Nut nicht ausreicht, kann noch zusätzlich Füllmasse, Walzbitumen oder ein Granulat zusammen mit Bitumen oder einem Haftmittel eingebracht werden. Eventuelle Hohlräume lassen sich durch Bindemittel wie Bitumen oder Epoxi versiegeln. Mit einer nachfolgenden Planierrolle wird die Nutoberfläche bis zum Niveau der Oberfläche des Verlegegrundes abgezogen.

Damit ist der Verlegevorgang mit Hilfe des erfindungsgemäßen Verfahrens abgeschlossen.

Es ist zweckmäßig, die einzelnen Einheiten zu einer gesamten Einpreß- und Verlegeeinheit zusammenzufassen, so daß sie zum Beispiel auf einem Tieflader transportierbar ist. Für eventuell vorzusehenden Überseetransporte lassen sich die Funktionseinheiten abkoppeln und einzeln in Einheiten ,zum Beispiel in Standardcontainern, verschiffen.

Insgesamt ergeben sich gegenüber dem Stand der Technik durch das Verfahren gemäß der Erfindung wesentliche Vorteile. Aufgrund der Nutherstellung durch Verdrängung,Einwalzen, oder Aufbrechen der Verschleißschicht eines Verlegegundes sind sehr schnelle
Verlegegeschwindigkeiten, zum Beispiel bis 30 m/min, zu erreichen. Dies ist gegenüber dem Verfahren mit dem Fugenschneiden eine wesentlich höhere Verlegegeschwindigkeit. So lassen sich nach dem neuen Verfahren innerhalb eines Tages ca. 20 bis 30 km eines Kabels wie z.B. Mikrokabels verlegen. Außerdem ist von Vorteil daß die beim Anwärmen der Verlegegrundoberfläche aufgewandte Wärme als Restwärme zum Einwalzen des verdrängten,als Wulst abgelagerten Materials nach dem Einlegen des Kabels zur Verfügung steht, die ausreicht, das wieder eingefüllte Material ausreichend zu verdichten.

Weiterhin kommt es bei dem Verfahren gemäß der Erfindung nicht darauf an, daß die Seiten der hergestellten Nut glatt und regelmäßig sind. Die Unregelmäßigkeiten, die beim Aufbruch der Nut entstehen, wirken sich sogar günstig aus, da die Unregelmäßigkeiten mit dem wieder eingefüllten Verlegegrundmaterial eine gute Bindung eingehen. Auch werden für das eingelegte Kabel keine Niederhalter benötigt, da die Befüllung der Nut und das Verdichten des eingefüllten Materials sofort nach dem Einlegen erfolgt. Ein Vorteil ist auch darin zu sehen, daß das verdrängte und ausgearbeitete Verlegegrundmaterial seitlich längs der Längsränder abgelagert und angeformt wird, wobei diese Formeinheit zugleich dazu dient, daß der Verlegegrund seitlich nach oben abgestützt wird, so daß ein ungewünschtes weiteres seitliches Aufreißen der Oberfläche verhindert wird. Bisher wurden die Nuten mit Heißbitumen vergossen, was bei diesem Verfahren nicht nötig ist. Die Kabelkonstruktion, die als äußere Umhüllung ein Rohr aufweist, gestattet, daß der Radialdruck voll abgefangen werden kann. Es können auch Verstärkungen oder Armierungen zusammen mit dem Kabel eingewalzt werden, die die Festigkeit weiter steigern. Für Richtungsänderungen können bogenförmige Einpressungen in die Oberfläche des Verlegegrundes eingebracht werden, wobei diese so ausgelegt sein müssen, daß sie den zulässigen Mindestbiegeradius des Kabels nicht unterschreiten.

Außerdem kann die Verlegung völlig witterungsunabhängig durchgeführt werden.

Das Verfahren gemäß der Erfindung ist auch gegenüber der Umwelt sehr verträglich, denn es ist keine Abfallbeseitigung oder Entsorgung von Bauschutt bzw. Nutaushub nötig. Außerdem wird der ursprüngliche Straßenaufbau nicht verändert, insbesondere erfolgt kein Eingriff in die Tragschicht des Verlegegrundes, zum Beispiel in den Betonunterbau einer Straße. Damit ist die vorgegebene Straßenfestigkeit weiterhin gegeben. Eine "Sollbruchstelle" in der Tragschicht des Verlegegrundes, wie sie unter Umständen beim Schneidverfahren entsteht, ist hier nicht gegeben. Dadurch, daß das Verlegegrundmaterial zur Bildung der Nut seitlich an die Oberfläche befördert wird, wird ein Überverdichten der Fahrbahn direkt unter der Nut, wie es bei anderen Verfahren der Fall ist, vermieden. Von Vorteil ist auch, daß die beim Verlegen benötigten Temperaturen von 80° bis 120° C weit unter denen liegen, die bei der Auffüllung mit Heißbitumen (260° C) liegen. Außerdem erfolgt die Verlegung mit wesentlich geringerem Energieeinsatz und mit wesentlich reduzierter Lärmbelästigung, da das Schneidegeräusch entfällt.

Diese Verlegeart kann auch bei einer Fahrbahnsanierung eingesetzt werden, wenn die Fahrbahndecke mit Glasfasermatten verstärkt wird oder wenn Fahrbahnmarkierungen bzw. Fahrbahnverstärkungen am Randstreifen aufgewalzt werden. Fasern können dann direkt in die Glasfasermatten oder die Randstreifen mit eingearbeitet werden. Als Bindemittel und Füllmaterial kann neben Bitumen auch warmhärtendes Epoxi verwendet werden, was zur besseren Kenntlichkeit eingefärbt werden kann.

Das Kabel läßt sich auch leichter bergen, da es in geringer Tiefe eingebettet ist und nur mit einer dünnen Überdeckung verdeckt ist. Auch beim Bergen entsteht kein Sondermüll, der separat entsorgt werden muß. Von Vorteil ist auch, daß bei der allmählichen Erwärmung vor Einbringung der Nut das Bitumen einer Asphaltdecke thermisch nicht geschädigt wird.

Auch an der Maschine zum Verlegen eines Kabels nach diesem Verfahren ergeben sich besondere Vorteile, da das Einpressen, Kabellegen, Verfüllen und Verfestigen in einem aufeinander abgestimmten Ablauf erfolgt. Zweckmäßigerweise wird die Straßenoberfläche vor dem Einpressen bzw. Aushub der Nut gereinigt, wobei der Staub über eine Absaugvorrichtung entsorgt wird. Die Nutformeinheit mit ihrem Rollensatz kann hydraulisch gesenkt werden, so daß dadurch die Nuttiefe stufenlos eingestellt werden kann. Die Rollen sind in ihrem Durchmesser und ihrer Breite zueinander abgestuft, so daß die Nut allmählich vertieft und erweitert wird. Die Flankenform der Rolle verbreitert sich mit der Rollenzahl. Außerdem kann die Rollenform der gewünschten Nutform angepaßt werden. Die Rollen des Rollensatzes sind bei Verschleiß bzw. anderer Fahrbahnzusammensetzung leicht austauschbar. Durch die allmähliche Erwärmung in einer langen, schmalen Wärmezonewird das Verlegegrundmaterial besonders schonend behandelt. Die verwendete Heizeinheit ist lenkbar, so daß auch Kurven damit gefahren werden können. Die Heizeinheit wird zweckmäßigerweise durch Aneinanderreihen von Heizkissen nach den Erfordernissen entsprechend erweitert. Die gesamte Einpreß- und Verlegeeinheit ist zweckmäßigerweise selbstfahrend,an die weitere Funktionseinheiten angekoppelt werden können.

Durch das erfindungsgemäße Verfahren erhält man auch eine längswasserdichte Nut zwischen dem Kabel und der Nutwand, so daß die Feuchte reduziert ist und die Hohlräume auf ein Minimum herabgesenkt sind. Dadurch ist der gesamte Bereich weniger frostempfindlich. Bei Bedarf können Bitumen oder andere Füll- und Bindemittel verwendet werden, die eine zusätzliche Bindung zwischen dem Nutrand und dem wieder eingebrachten Verlegegrundmaterial herstellen. Insgesamt ergibt sich eine gute mechanische Festigkeit der wieder verfüllten Nut durch "Verkeilen" des wieder eingebrachten Verlegegrundmaterials in der Nutenwand. Dabei wird das Kabel durch das gleichmäßig umgebende Material geführt und auch bei Temperaturschwankungen ausreichend fixiert, so daß es nicht "aufsteigen" kann. Das Einpressen kann durch eine überlagerte Vibrationsplatte zusätzlich erleichtert werden. Außerdem kann die Rollenform der Fülleinheit so gewählt werden, daß das verdrängte Verlegegrundmaterial zusammengehalten wird, die Oberfläche nicht aufreißt und das aufgebrochene Verlegegrundmaterial direkt in die Nut eingewalzt werden kann. Die Haftfähigkeit zur Nutwandung kann durch Zugabe eines Primers erhöht werden. Wenn schließlich das Rohr des verlegten Kabels mit einem Polyethylenmantel umgeben ist, wird das eventuell erforderliche Heben des Kabels vereinfacht, da an diesem Mantel Bitumen oder Primer nicht besonders gut haften.

Die Erfindung wird nun anhand von drei Figuren näher erläutert.
- Figur 1: zeigt eine Verlege- und Einpreßeinheit gemäß der Erfindung in prinzipieller schematischer Anordnung.
- Figur 2: zeigt die eingepreßte Nut im offenen Zustand mit bereits eingelegtem Kabel.
- Figur 3: zeigt die wieder geschlossene Nut mit eingelegtem Kabel.

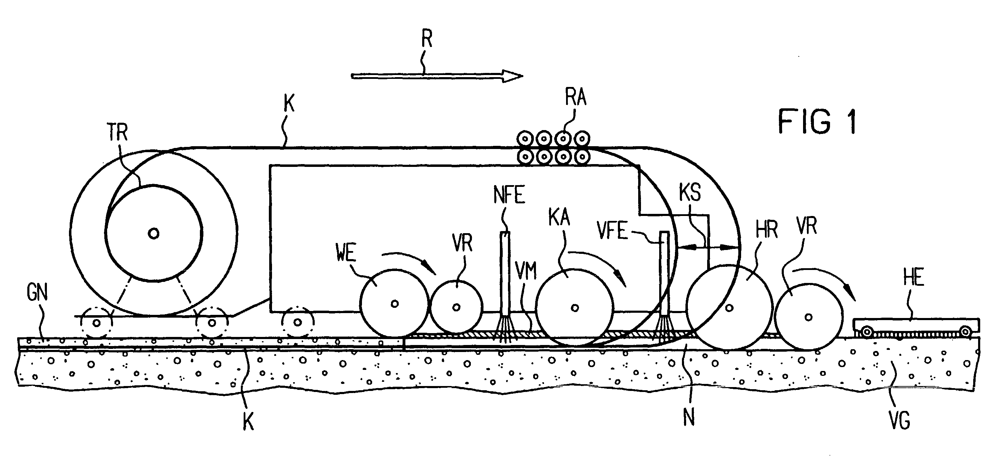

Die Figur 1 zeigt in prinzipieller Darstellung eine Verlege- und Einpreßeinheit, die sich sowohl aus einzelnen Funktionseinheiten zusammensetzen als auch als eine Gesamteinheit aufbauen läßt. Zweckmäßigerweise ist jedoch die Heizeinheit selbständig und läßt sich in einfacher Weise an die Resteinheiten ankoppeln. Mit der Heizeinheit HE wird der Verlegegrund VG im Bereich der herzustellenden Nut bis zur Erweichung erwärmt. Nach Erreichen der Erweichungstemperatur greift die Nutformeinheit, zum Beispiel mit dem gezeigten Rollensatz aus einer Vorrolle VR mit kleinerem Durchmesser und einer Hauptrolle HR mit größerem Durchmesser, nutformend auf den erwärmten Verlegegrund VG ein. Auf diese Weise wird der erwärmte Verlegegrund VG verdrängt, wodurch sich seitlich der Rollen VR bzw. HR Wülste ausbilden, die entlang der Längsränder der Nut als verdrängtes Verlegematerial verlaufen. Anschließend an die Bildung der Nut N wird mit Hilfe eines Rollenabzuges RA das zu verlegende Kabel K von der mitgeführten Kabeltrommel TR abgezogen und in die offene Nut N mit Hilfe einer Kabelandruckrolle KA eingelegt. Zweckmäßigerweise wird noch vor dem Einführen des Kabels KA mit einer Vorfülleinrichtung VFE ein Haftvermittler in die Nut eingebracht, so daß bereits im Nutgrund eine Verbesserung der Haftwirkung erreicht wird. Auch nach dem Einführen des Kabels wird zweckmäßigerweise mit Hilfe einer Nachfülleinrichtung NFE ebenfalls ein Haftvermittler, zum Beispiel ein Primer oder Bitumen eingefüllt um die Haftung zum nachfolgenden Füllmaterial zu verbessern. In der Figur 1 ist auch erkennbar, daß das verdrängte Verlegegrundmaterial VM entlang der offenen Nut N als Wulst abgelagert wird bzw. aus der Oberfläche des Verlegegrundes heraustritt. Im Anschluß daran wird über eine Fülleinrichtung die Nut N verschlossen und zwar mit dem seitlich aufgeworfenen und verdrängten Verlegematerial. Dies erfolgt durch seitliche Verschiebung des wulstartig aufgeformten Verlegematerials mit entsprechenden Verdichtungsrollen VR, einem Trichter oder ähnlichem. Schließlich wird mit einer Walzeinheit WE das in die Nut wieder eingefüllte Verlegegrundmaterial verdichtet und im Niveau der übrigen Oberfläche des Verlegegrundes abgezogen. Im Endzustand verbleibt die gefüllte Nut GN mit dem eingelegten Kabel K. Im Bereich des Kabeleinzuges wird durch ein gewisses Kabelplus ein sogenannter Kabelspeicher KS gestaltet, durch den Unregelmäßigkeiten und Toleranzen im Fortlauf der Verlegeeinheit ausgeglichen werden. Zur Übersicht ist noch durch den Pfeil R die Verlegerichtung angegeben.

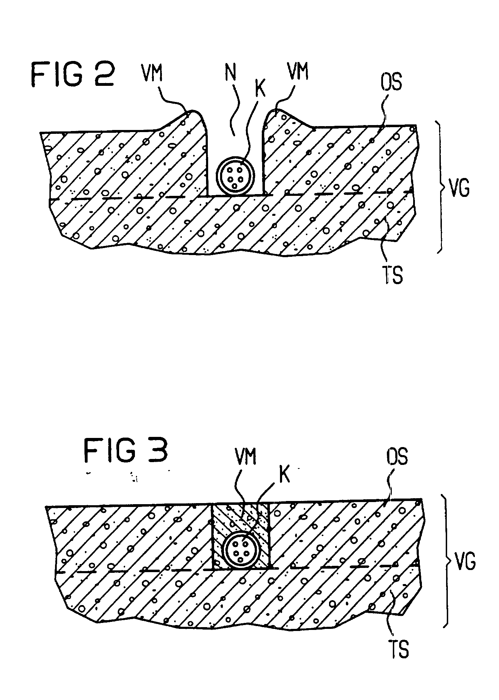

In Figur 2 ist eine in die Oberschicht OS eines Verlegegrundes VG mit der erfindungsgemäßen Verlegeeinheit eingebrachte Nut N dargestellt, die nicht in die Tragschicht TS des Gesamtverlegegrundes hineinreicht. Auf diese Weise ist gewährleistet, daß die Tragschicht TS unbeschädigt bleibt. Aus dieser Figur 2 wird deutlich, daß durch das Einformen, Einprägen oder Eindrücken der Nut N entlang der Seitenränder Materialverdrängungen entstehen, die als Wülste aus verdrängtem Verlegegrundmaterial VM entlang der Nutränder verlaufen. Bei dieser Darstellung ist angedeutet, daß das Kabel K, insbesondere ein Mikrokabel mit einer Röhre und darin verlaufenden Lichtwellenleitern, bereits eingeführt ist.

In Figur 3 wird verdeutlicht, daß die Nut N bereits mit Hilfe der Füll-, Verdichtungs- und Walzeinheiten mit dem bei der Nutherstellung verdrängten Verlegegrundmaterial VM aufgefüllt ist, wobei die gefüllte Nut mit der Oberfläche des Verlegegrundes bereits auf gleichem Niveau abgezogen ist.

## Patentansprüche

1. Verfahren zum Einbringen eines optischen oder elektrischen Kabels mit einer homogenen und druckwasserdichten Röhre und darin eingebrachten optischen oder elektrischen Leitern in einen festen Verlegegrund,
**dadurch gekennzeichnet,**
**daß** mit einer Heizeinheit die Oberfläche des Verlegegrundes bis zur Erweichung erwärmt wird, daß mit einer Nutformeinheit in den erwärmten Verlegegrund eine Nut durch Verdrängung von Verlegegrundmaterial eingebracht wird, wobei sich das an die Oberfläche des Verlegegrundes verdrängte Verlegegrundmaterial entlang mindestens eines Nutrandes als Wulst ausbildet, daß mit einer Verlegeeinheit das optische oder elektrische Kabel in die Nut eingebracht wird, daß mit einer Fülleinheit das verdrängte Verlegegrundmaterial auf das eingeführte Kabel in die Nut wieder eingefüllt wird und daß mit einer Walzeinheit das in die Nut wieder eingebrachte Verlegegrundmaterial verdichtet wird.

2. Verfahren nach Anspruch 1,
**dadurch gekennzeichnet,**
**daß** mit einer Formeinheit das verdrängte Verlegegrundmaterial entlang der Nut angeformt wird.

3. Verfahren nach einem der vorhergehenden Ansprüche,
**dadurch gekennzeichnet,**
**daß** mit der Walzeinheit das überschüssige, wieder eingefüllte Verlegegrundmaterial auf Niveau der Oberfläche des Verlegegrundes abgezogen wird.

4. Verfahren nach einem der vorhergehenden Ansprüche,
**dadurch gekennzeichnet,**
**daß** Unregelmäßigkeiten oder Materialmangelstellen beim Einfüllen des Verlegegrundmaterials mit Füllmasse, vorzugsweise Bitumen, Granulat aus Verlegegrundmaterial oder Epoxi, ausgefüllt werden.

5. Verfahren nach einem der vorhergehenden Ansprüche,
**dadurch gekennzeichnet,**
**daß** die Nutformeinheit in vertikale Schwingungen versetzt wird.

6. Verfahren nach einem der vorhergehenden Ansprüche,
**dadurch gekennzeichnet,**
**daß** die Verdrängung des Verlegegrundmaterials mit einer Nutformeinheit ausgeführt wird, die einen Rollensatz aus mindestens einer Formrolle zur Nutformung aufweist.

7. Verfahren nach einem der Ansprüche 1 bis 5,
**dadurch gekennzeichnet,**
**daß** die Verdrängung des Verlegegrundmaterials mit einer Nutformeinheit ausgeführt wird, die einen Schlitten, vorzugsweise mit einer oszillierenden Kufe, zur Nutformung aufweist.

8. Verfahren nach einem der Ansprüche 1 bis 5,
**dadurch gekennzeichnet,**
**daß** die Verdrängung des Verlegegrundmaterials mit einer Nutformeinheit ausgeführt wird, die einen mit hoher Frequenz vibrierenden Stößel aufweist.

9. Verfahren nach einem der vorhergehenden Ansprüche,
**dadurch gekennzeichnet,**
**daß** die Erwärmung mit der Heizeinheit fortlaufend steigend vorgenommen wird, vorzugsweise mit mehreren hintereinander geführten Einzeleinheiten.

10. Verfahren nach einem der vorhergehenden Ansprüche,
**dadurch gekennzeichnet,**
**daß** die Nutformeinheit beheizt wird.

11. Verfahren nach Anspruch 6,
**dadurch gekennzeichnet,**
**daß** im Rollensatz der Nutformeinheit mehrere hintereinander geführte Rollen mit verschiedenen Durchmessern und/oder Stärken geführt werden.

12. Verfahren nach einem der vorhergehenden Ansprüche,
**dadurch gekennzeichnet,**
**daß** zumindest die Verlegeeinheit mit der Nutformeinheit, der Formeinheit und der Walzeinheit hydraulisch abgesenkt oder gehoben wird.

13. Verfahren nach einem der vorhergehenden Ansprüche,
**dadurch gekennzeichnet,**
**daß** die Nutränder während der Nutformung durch mitlaufende Stützelemente, vorzugsweise Stützrollen in der Formeinheit, gegen seitliches Aufreißen gesichert werden.

14. Verfahren nach einem der vorhergehenden Ansprüche,
**dadurch gekennzeichnet,**
**daß** das Kabel in der Verlegeeinheit von einer Kabeltrommel abgezogen, durch eine Kabelführung in die Nut eingebracht und durch einen Niederhalter oder eine Kabelandruckrolle bis zur Einbringung des verdrängten, seitlich abgelagerten Verlegegrundmaterials fixiert wird.

15. Verfahren nach einem der vorhergehenden Ansprüche,
**dadurch gekennzeichnet,**
**daß** ein Haftvermittler, vorzugsweise ein Primer oder Bitumen, vor und/oder hinter der Kabeleinführung durch eine Vorfüll- und/oder Nachfülleinheit in die Nut eingebracht wird.

16. Verfahren nach einem der vorhergehenden Ansprüche,
**dadurch gekennzeichnet,**
**daß** das verdrängte, seitlich abgelagerte Verlegegrundmaterial in der Fülleinheit durch einen Sammler, der vorzugsweise trichterförmig ausgebildet ist, zusammengefaßt und mit der Walzeinheit in die Nut eingebracht und verdichtet wird.

17. Verfahren nach einem der vorhergehenden Ansprüche,
**dadurch gekennzeichnet,**
**daß** sämtliche Einheiten zu einer gesamten Verlege- und Einpreßeinheit, vorzugsweise über Kupplungen, zusammengefaßt werden und entlang der Verlegetrasse selbstlaufend oder gezogen in Arbeitsrichtung bewegbar sind/ist.

18. Verfahren nach einem der vorhergehenden Ansprüche,
**dadurch gekennzeichnet,**
**daß** die Nut für die Aufnahme des Kabels in die Oberschicht aus Asphalt eines Verlegegrundes eingebracht wird.

19. Verfahren nach einem der vorhergehenden Ansprüche,
**dadurch gekennzeichnet,**
**daß** ein Mikrokabel, bestehend aus einer Röhre mit einem Außendurchmesser von 2 bis 15 mm und darin lose eingebrachten Lichtwellenleitern, in die Nut des Verlegegrundes eingeführt wird.

20. Verfahren nach einem der vorhergehenden Ansprüche,
**dadurch gekennzeichnet,**
**daß** die Nut im Verlegegrund mit einer Tiefe von 2 bis 3 cm,maximal bis zur Stärke der Oberschicht eines Verlegegrundes hergestellt wird.

21. Verfahren nach einem der vorhergehenden Ansprüche,
**dadurch gekennzeichnet,**
**daß** das Kabel von einem Raupenabzug mit Speicherplus zwischen dem Raupenabzug und dem Niederhalter bzw. der Andruckrolle von der mitgeführten Kabeltrommel abgezogen wird.

22. Vorrichtung zum Einbringen eines Kabels in einen festen Verlegegrund nach dem Verfahren der Ansprüche 1 bis 21,
**dadurch gekennzeichnet,**
**daß** die Vorrichtung eine Heizeinheit zum Erwärmen der Oberfläche des Verlegegrundes im Bereich einer einzubringenden Nut, eine Nutformeinheit zur Bildung der Nut durch Verdrängung von Verlegegrundmaterial, eine Verlegeeinheit zum Abziehen des zu verlegenden Kabels von der Kabeltrommel und zum Einführen des Kabels in die Nut und zum Niederhalten desselben, eine Fülleinheit zur Einbringung des verdrängten Verlegegrundmaterials und eine Walzeinheit zum Verdichten und Abschließen der Nut mit vorher verdrängtem Verlegegrundmaterial aufweist.

23. Vorrichtung nach Anspruch 22,
**dadurch gekennzeichnet,**
**daß** die Nutformeinheit mindestens eine Rolle in einem absenkbaren Rollensatz enthält.

24. Vorrichtung nach Anspruch 22,
**dadurch gekennzeichnet,**
**daß** die Nutformeinheit mindestens eine Kufe eines Schlittens, vorzugsweise eine vibrierende Kufe, zur Einformung der Nut aufweist.

25. Vorrichtung nach Anspruch 23,
**dadurch gekennzeichnet,**
**daß** die Rollen rechteckigen Querschnitt aufweisen.

26. Vorrichtung nach Anspruch 23,
**dadurch gekennzeichnet,**
**daß** die Rollen zumindest zum Teil konischen Querschnitt aufweisen.

27. Vorrichtung nach einem der Ansprüche 22 bis 26,
**dadurch gekennzeichnet,**
**daß** zwischen einem Kabelabzug, vorzugsweise einem Raupenabzug, und dem Nuteinführungspunkt ein Kabelplus ausgebildet ist.

28. Vorrichtung nach einem der Ansprüche 22 bis 27,
**dadurch gekennzeichnet,**
**daß** die einzelnen Funktionseinheiten getrennt voneinander angeordnet, jedoch über Kupplungen miteinander verbunden sind.

29. Vorrichtung nach einem der Ansprüche 22 bis 28,
**dadurch gekennzeichnet,**
**daß** alle Einheiten zu einer einzigen Verlege- und Einpreßeinheit fest miteinander verbunden sind.

## Claims

1. Process for introducing an optical or electrical cable, having a homogeneous and pressurized-water-tight tube and optical or electrical conductors introduced therein, into solid ground, **characterized in that** a heating unit is used to heat the ground surface until the latter softens, **in that** a channel-forming unit is used to introduce a channel into the heated ground by virtue of displacing ground material, the ground material which is displaced to the ground surface forming a ridge along at least one channel border, **in that** a laying unit is used to introduce the optical or electrical cable into the channel, **in that** a filling unit is used to reintroduce the displaced ground material into the channel, on top of the cable which has been introduced, and **in that** a rolling unit is used to compact the ground material which has been reintroduced into the channel.

2. Process according to Claim 1, **characterized in that** a forming unit is used to stabilize the displaced ground material along the channel.

3. Process according to one of the preceding claims, **characterized in that** the rolling unit levels off the excess, reintroduced ground material with the ground surface.

4. Process according to one of the preceding claims, **characterized in that**, during introduction of the ground material, irregularities or locations where there is a lack of material are filled with filler, preferably bitumen, granules of ground material or epoxy.

5. Process according to one of the preceding claims, **characterized in that** the channel-forming unit is made to vibrate vertically.

6. Process according to one of the preceding claims, **characterized in that** the ground material is displaced by a channel-forming unit which has a roller arrangement comprising at least one forming roller for channel-forming purposes.

7. Process according to one of Claims 1 to 5, **characterized in that** the ground material is displaced by a channel-forming unit which has a carriage, preferably with an oscillating runner, for channel-forming purposes.

8. Process according to one of Claims 1 to 5, **characterized in that** the ground material is displaced by a channel-forming unit which has a ram which vibrates at high frequency.

9. Process according to one of the preceding claims, **characterized in that** the heating unit performs the heating operation in a progressively increasing manner, preferably by way of a plurality of individual units guided one behind the other.

10. Process according to one of the preceding claims, **characterized in that** the channel-forming unit is heated.

11. Process according to Claim 6, **characterized in that** provided in the roller arrangement of the channel-forming unit are a plurality of rollers which are guided one behind the other and are of different diameters and/or thicknesses.

12. Process according to one of the preceding claims, **characterized in that** at least the laying unit, with the channel-forming unit, the forming unit and the rolling unit, is lowered or raised hydraulically.

13. Process according to one of the preceding claims, **characterized in that**, as the channel is formed, the channel borders are prevented from cracking at the sides by accompanying supporting elements, preferably supporting rollers in the forming unit.

14. Process according to one of the preceding claims, **characterized in that** the cable in the laying unit is drawn off from a cable drum, introduced into the channel by way of a cable guide and fixed by a holding-down device or a cable pressure-exerting roller until the ground material which has been displaced and deposited at the sides is introduced.

15. Process according to one of the preceding claims, **characterized in that** an adhesion promoter, preferably a primer or bitumen is introduced into the channel by a prefilling unit and/or secondary-filling unit before and/or after the cable is introduced.

16. Process according to one of the preceding claims, **characterized in that** the ground material which has been displaced and deposited at the sides, is brought together in the filling unit by a collector, which is preferably designed in the form of a hopper, and is introduced into the channel and compacted by the rolling unit.

17. Process according to one of the preceding claims, **characterized in that** all the units are combined, preferably via couplings, to form a complete laying and pressing-in unit and can be moved by self-propulsion or traction along the cable-laying route in the operating direction.

18. Process according to one of the preceding claims, **characterized in that** the channel for receiving the cable is introduced into the top, asphalt course of the ground.

19. Process according to one of the preceding claims, **characterized in that** a microcable comprising a tube with an external diameter of from 2 to 15 mm, and optical waveguides introduced loosely therein, is introduced into the channel in the ground.

20. Process according to one of the preceding claims, **characterized in that** the channel in the ground is produced with a depth of from 2 to 3 cm, at most to the depth of the thickness of the top course of the ground.

21. Process according to one of the preceding claims, **characterized in that** the cable is drawn off from the accompanying cable drum by a caterpillar pull-off with storage excess between the caterpillar pull-off and the holding-down device or the pressure-exerting roller.

22. Machine for introducing a cable into solid ground using the process of Claims 1 to 21, **characterized in that** the machine has a heating unit for heating the ground surface in the region of the channel which is to be introduced, a channel-forming unit for forming the channel by virtue of displacing ground material, a laying unit for drawing off from the cable drum the cable which is to be laid and for introducing the cable into the channel and for holding down said cable, a filling unit for introducing the displaced ground material, and a rolling unit for compacting and closing off the channel with previously displaced ground material.

23. Machine according to Claim 22, **characterized in that** the channel-forming unit contains at least one roller in a lowerable roller arrangement.

24. Machine according to Claim 22, **characterized in that** the channel-forming unit has at least one carriage runner, preferably a vibrating runner, for forming the channel.

25. Machine according to Claim 23, **characterized in that** the rollers are of rectangular cross-section.

26. Machine according to Claim 23, **characterized in that** the rollers are of at least partly conical cross-section.

27. Machine according to one of Claims 22 to 26, **characterized in that** a cable excess is formed between a cable pull-off, preferably a caterpillar pull-off, and the point where the channel is introduced.

28. Machine according to one of Claims 22 to 27, **characterized in that** the individual functional units are arranged separately from one another, but are connected to one another via couplings.

29. Machine according to one of Claims 22 to 28, **characterized in that** all the units are connected fixedly to one another to form a single laying and pressing-in unit.

## Revendications

1. Procédé d'enfouissement dans un sol de pose solide, d'un câble optique ou électrique comprenant une gaine tubulaire homogène et étanche à l'eau sous pression dans laquelle sont placés des conducteurs optiques ou électriques, **caractérisé en ce que** l'on échauffe jusqu'à ramollissement la surface du sol de pose à l'aide d'une unité de chauffage, **en ce que** l'on réalise une rainure dans le sol de pose chauffé, à l'aide d'une unité de formage de rainure, par refoulement de matériau du sol de pose, le matériau du sol de pose ayant été refoulé à la surface du sol de pose se formant en tant que bourrelet le long d'au moins un bord de la rainure, **en ce que** l'on introduit le câble optique ou électrique dans la rainure à l'aide d'une unité de pose, **en ce que** l'on réintroduit à nouveau dans la rainure, le matériau du sol de pose refoulé, par-dessus le câble, au moyen d'une unité de remplissage ou de remblayage, et **en ce que** l'on compacte le matériau du sol de pose à nouveau réintroduit dans la rainure, au moyen d'une unité de damage à rouleau.

2. Procédé selon la revendication 1, **caractérisé en ce que** l'on met en forme le matériau du sol de pose refoulé, le long de la rainure, au moyen d'une unité de formage.

3. Procédé selon l'une des revendications précédentes, **caractérisé en ce qu'**au moyen de l'unité de damage à rouleau, on met au niveau de la surface du sol de pose, le matériau du sol de pose en excédent ayant servi au remblayage.

4. Procédé selon l'une des revendications précédentes, **caractérisé en ce que** des irrégularités ou des zones de carence de matériau sont comblées, lors du remblayage avec le matériau du sol de pose, par une masse de charge de remplissage, de préférence du bitume, des granulats de matériau du sol de pose ou un époxyde.

5. Procédé selon l'une des revendications précédentes, **caractérisé en ce que** l'on met l'unité de formage de rainure en vibration verticale.

6. Procédé selon l'une des revendications précédentes, **caractérisé en ce que** le refoulement du matériau du sol de pose est effectué à l'aide d'une unité de formage de rainure, qui comporte un jeu de galets constitué d'au moins un galet de formage pour former la rainure.

7. Procédé selon l'une des revendications 1 à 5, **caractérisé en ce que** le refoulement du matériau du sol de pose est effectué à l'aide d'une unité de formage de rainure, qui comporte un chariot, de préférence avec un patin oscillant, pour former la rainure.

8. Procédé selon l'une des revendications 1 à 5, **caractérisé en ce que** le refoulement du matériau du sol de pose est effectué à l'aide d'une unité de formage de rainure, qui comporte un pilon vibrant à haute fréquence.

9. Procédé selon l'une des revendications précédentes, **caractérisé en ce que** l'échauffement est effectué à l'aide de l'unité de chauffage, de manière continuellement croissante, de préférence à l'aide de plusieurs unités individuelles montées et guidées les unes à la suite des autres.

10. Procédé selon l'une des revendications précédentes, **caractérisé en ce que** l'unité de formage de rainure est chauffée.

11. Procédé selon la revendication 6, **caractérisé en ce que** dans le jeu de galets de l'unité de formage de rainure sont montés et guidés plusieurs galets successifs présentant des diamètres différents et/ou des épaisseurs différentes.

12. Procédé selon l'une des revendications précédentes, **caractérisé en ce qu'**au moins l'unité de pose comprenant l'unité de formage de rainure, l'unité de formage et l'unité de damage par rouleau, est abaissée ou soulevée de manière hydraulique.

13. Procédé selon l'une des revendications précédentes, **caractérisé en ce que** les bords de la rainure sont sécurisés à l'encontre d'un arrachement latéral, durant le formage de la rainure, par des éléments d'appui accompagnant le mouvement d'avance, de préférence des galets d'appui de l'unité de formage.

14. Procédé selon l'une des revendications précédentes, **caractérisé en ce que** le câble, dans l'unité de pose, est déroulé d'un tambour à câble, est introduit dans la rainure par un guide-câble et est fixé par un presse-câble ou un galet d'application de câble jusqu'au remblayage du matériau du sol de pose refoulé, déposé latéralement.

15. Procédé selon l'une des revendications précédentes, **caractérisé en ce qu'**un agent adhésif, de préférence un primaire d'accrochage ou du bitume, est enfoui dans la rainure avant et/ou après l'introduction du câble, par une unité de remplissage ou de remblayage préalable et/ou postérieure.

16. Procédé selon l'une des revendications précédentes, **caractérisé en ce que** le matériau du sol de pose, refoulé et stocké latéralement, est regroupé dans l'unité de remblayage ou de remplissage, au moyen d'un collecteur, qui de préférence est d'une configuration en forme de trémie, et introduit dans la rainure et compacté au moyen de l'unité de damage à rouleau.

17. Procédé selon l'une des revendications précédentes, **caractérisé en ce que** l'ensemble des unités sont regroupées, de préférence au moyen d'accouplements, en une unité globale de défonçage, de pose et d'enfouissement, et sont/est déplacée(s) de manière autonome le long du tracé de pose ou en étant tractée(s) dans la direction de travail.

18. Procédé selon l'une des revendications précédentes, **caractérisé en ce que** la rainure destinée à recevoir le câble est réalisée dans la couche supérieure d'asphalte d'un sol de pose.

19. Procédé selon l'une des revendications précédentes, **caractérisé en ce que** l'on introduit dans la rainure du sol de pose, un micro-câble constitué d'une gaine tubulaire d'un diamètre extérieur de 2 à 15 mm dans laquelle sont logés librement des guides d'ondes lumineuses ou fibres optiques.

20. Procédé selon l'une des revendications précédentes, **caractérisé en ce que** la rainure dans le sol de pose est réalisée avec une profondeur de 2 à 3 cm, au maximum égale à l'épaisseur de la couche supérieure du sol de pose.

21. Procédé selon l'une des revendications précédentes, **caractérisé en ce que** le câble est dévidé du tambour à câble entraîné l'ensemble, au moyen d'un système de traction à chenilles, avec un tampon de compensation de longueur de câble entre le système de traction à chenilles et le presse-câble ou le galet d'application.

22. Dispositif pour l'enfouissement d'un câble dans un sol de pose solide selon le procédé des revendications 1 à 21, **caractérisé en ce que** le dispositif comprend une unité de chauffage destinée à échauffer la surface du sol de pose dans la zone d'une rainure devant y être réalisée, une unité de formage de rainure destinée à former la rainure par refoulement de matériau du sol de pose, une unité de pose pour dévider le câble à poser d'un tambour à câble et pour introduire le câble dans la rainure et l'y maintenir, une unité de remblayage ou de remplissage destinée à réintroduire le matériau du sol de pose ayant été refoulé, et une unité de damage à rouleau pour compacter et obstruer la rainure à l'aide de matériau du sol de pose refoulé auparavant.

23. Dispositif selon la revendication 22, **caractérisé en ce que** l'unité de formage de rainure renferme au moins un galet dans un train de galets pouvant être abaissé.

24. Dispositif selon la revendication 22, **caractérisé en ce que** l'unité de formage de rainure comporte au moins un patin d'un chariot, de préférence un patin vibrant, pour former la rainure.

25. Dispositif selon la revendication 23, **caractérisé en ce que** les galets présentent une section transversale rectangulaire.

26. Dispositif selon la revendication 23, **caractérisé en ce que** les galets présentent au moins en partie une section transversale conique.

27. Dispositif selon l'une des revendications 22 à 26, **caractérisé en ce qu'**entre le système de traction de câble, de préférence le système de traction à chenilles, et le point d'introduction dans la rainure, est formé un tampon de compensation de longueur de câble.

28. Dispositif selon l'une des revendications 22 à 27, **caractérisé en ce que** les unités fonctionnelles individuelles sont disposées de manière séparée les unes des autres, mais sont toutefois mutuellement reliées au moyen d'accouplements.

29. Dispositif selon l'une des revendications 22 à 28, **caractérisé en ce que** toutes les unités sont reliées les unes aux autres de manière fixe, pour former une unité unique de défonçage, de pose et d'enfouissement.
